# EUROPEAN PATENT SPECIFICATION

(11) **EP 3 054 366 B1**
(45) Date of publication and mention of the grant of the patent: **26.02.2020**
(21) Application number: 15154063.0
(22) Date of filing: 06.02.2015
(51) Int. Cl.: G05D 23/02, F24D 19/10, F16K 35/00

(54) **Thermostat**
Thermostat
Thermostat

(43) Date of publication of application: 10.08.2016
(73) Proprietor: Rettig ICC B.V., 6199 AA Maastricht-Airport (NL)
(72) Inventor: Arvidsson, Thomas, 34135 Ljungby (SE); Schubert, Niclas, 23737 Bjärred (SE); Lundbäck, Andreas, 34396 Hallaryd (SE)
(74) Representative: AWA Sweden AB

(56) References cited:
- DE-U1-202009 016 394
- GB-A- 2 043 212
- GB-A- 2 459 664
- US-A- 5 611 517

## Description

### Technical field

The present disclosure relates to a thermostat and a thermostat/valve combination, for a radiator, the thermostat including a body portion, which is adapted to be mounted to a radiator valve of the radiator, and a sensing element which, depending on room temperature, influences a piston, an end of the piston being adapted, under operation, to influence a valve pin of the radiator valve.

### Background

Such thermostates are used in large numbers in countries requiring heating, to control emission of thermal energy in a room to a desired temperature. Prior art thermostats are disclosed in GB2043212, which discloses a thermostatic flow control valve, GB2459664, which discloses central heating control apparatus, US5611517, which discloses a control unit for aumotaic faucet, and DE202009016394 U1, which discloses a thermostat.

One problem with such thermostates is how to make their installation more efficient to reduce construction costs.

### Summary

This problem is solved by a thermostat as defined in claim 1 and a corresponding thermostat/valve combination as defined in claim 5.

More specifically, a thermostat of the initially mentioned kind then comprises a removable balancing pin with a blocking part which is inserted in the thermostat body portion and which, when the thermostat is connected to a radiator valve, prohibits the piston from influencing a radiator valve pin until the removable balancing pin is removed.

This means that the thermostat can be prevented from becoming active until balancing of the overall heating system has been carried out. When this is done, the balancing pin is removed, and this can be carried out by a layman. Consequently, as compared to prior processes where the valve is first set to a reference value with a special tool, the system is balanced, the tool is removed and the thermostat is fitted, the installation becomes much simplified. The thermostat can be fitted to the radiator valve already from the outset during installation.

The removable balancing pin may comprise a gripping part, which is connected to the blocking part and which is accessible from the exterior of the thermostat to pull out the blocking part of the balancing pin from the thermostat body portion. This means that not even a pair of tongs is needed to remove the balancing pin.

The blocking part may have a contact surface which is aligned with a centre axis of the piston, where the contact surface is adapted to allow the valve pin to extend a predetermined distance out of the valve. This allows the valve pin to have a predetermined balancing setting.

The blocking part may have a U-shaped cross section, forming a groove which is adapted to accommodate the valve pin and allow the valve pin to extend the predetermined distance out of the valve, while the blocking part thanks to the U-shaped cross section has an improved stiffness.

As mentioned, the predetermined distance may correspond to a balancing setting of the valve, typically the valve pin may extend in the range between 2 and 6 mm from the adjacent valve surface.

A corresponding combination of thermostat and a valve for a radiator is also considered.

### Brief description of the drawings

Fig 1 shows a thermostat.
Fig 2 shows the thermostat of fig 1 with a balancing pin.
Fig 3 is a cross section through a thermostat.
Fig 4 shows a perspective view of a combination of a thermostat with a connected valve.
Fig 5A is a perspective view of a balancing pin.
Fig 5B illustrates one embodiment schematically where a balancing pin keeps a valve pin at a reference position
Fig 6A shows a part cross section of the combination in fig 4.
Fig 6B shows an enlarged portion of fig 6A.

### Detailed description

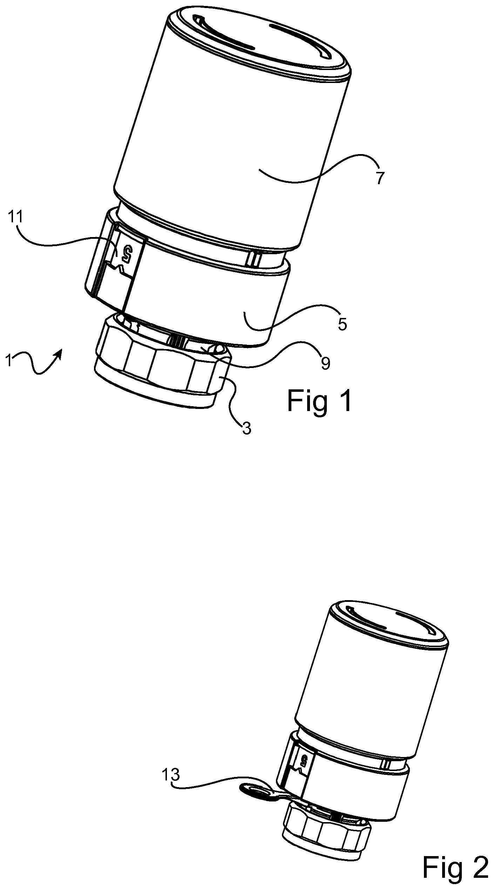

The present disclosure relates to a thermostat for a radiator and a combination of a thermostat and a radiator valve. An example of a thermostat 1 is shown in fig 1 and includes a connecting nut 3, for connecting the thermostat 1 to the valve (not shown in fig 1) of a radiator, a sleeve 5 which is fixed in relation to the valve when the connecting nut 3 is tightened. The thermostat further comprises a knob 7 that is turnably attached to a base part 9, which is connected to the sleeve 5, in such a way that the knob can be used to change the setting of the thermostat, and as a result change the flow of a heating medium through the radiator. In the illustrated case a window 11 is provided in the sleeve 5, and a digit "5" marked on the knob is visible through the window to indicate the present setting of the thermostat.

Fig 2 shows the thermostat of fig 1 with a balancing pin 13, that is used when initially installing a radiator system.

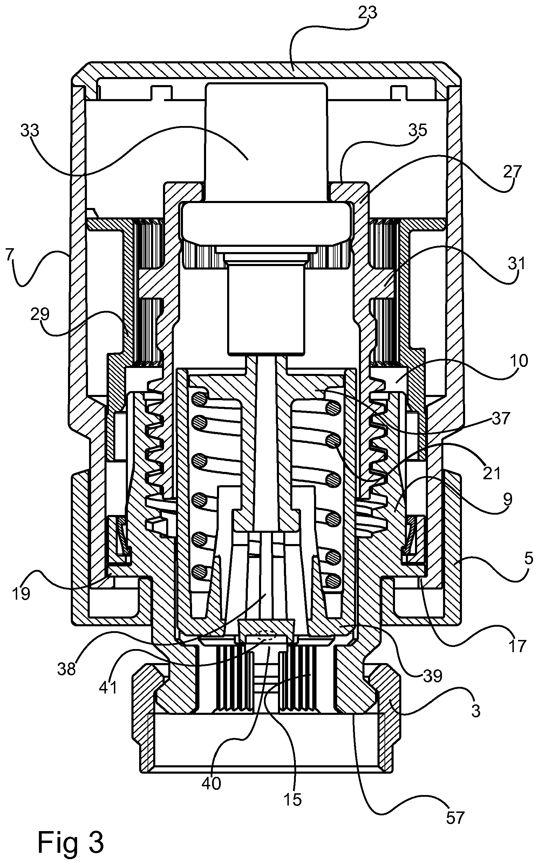

Fig 3 is a cross section through an example of a thermostat. The thermostat is built on a base part 9, which has a front cavity 15 for accommodating the connecting part of a radiator valve. The inner walls of the front cavity 15 may as illustrated be fluted, and the opposing surfaces of the valve connecting part may be fluted as well to prevent that the thermostat swivels around the valve. As mentioned, a connecting nut 3 of the thermostat can be tightened to a corresponding threaded part on the valve to fix the thermostat to the valve.

The knob 7 is formed as a hollow cylinder, and a circumferential collar portion 17 at its inner end (facing the valve) may be arranged to rest against a circumferential shoulder portion 19 on the base part 9, such that the knob 7 can rotate around the base part 9, but is prevented from moving further from the valve. The collar portion 17 of the knob 7 may be urged against the shoulder portion of the base part 9 by means of a return spring (not shown) which may be located in a space 10 between the base part 9 and an intermediate member 29 that will be discussed further later. The outer end of the knob 7 cylinder is closed by an end lid 23.

The sleeve 5 is fixedly attached to the base part 9 and may as illustrated reach out and cover the inner part of the knob 7 to provide some constructional stability and to provide the aforementioned indicating window. The indicating digits, "5" shown in fig 1 are placed on the part of the knob 7 that are covered by the sleeve 5.

Inside the knob 7, a sensor holder 27 is disposed, which has an overall hollow cylindrical shape. The sensor holder 27 is attached to the knob 7 via an intermediate member 29. The intermediate member 29 presents a fluted inner cylindrical surface to a correspondingly fluted flange 31 of the sensor holder 27 which means that the intermediate member 29 fixes the sensor holder 27 radially, and forces the sensor holder 27 to rotate with the knob 7, while allowing a linear movement relative to the knob 7. At the same time, the front part of the sensor holder, closest to the radiator, is in threaded engagement with the base part 9. This means that turning the knob 7 will displace the sensor holder 27 within the thermostat.

A wax sensing element 33 in a casing, which is not shown in cross section, is disposed within the sensor holder 27 and rests against an inward facing collar portion 35 at the rear end thereof as seen from the radiator. The wax sensing element 33 reacts on changing ambient room temperature by expanding and contracting as is well known per se. The wax sensing element 33 influences a piston 37, 38, 39, 41 a part 37 of which reaches into the casing of the wax sensing element 33. A region 41 at the opposing end of the piston 37 in turn operates against the pin of the valve to which the thermostat is connected, and the valve pin is urged against this region by means of a return spring in the valve. The piston 37, 38, 39, 41 itself can be axially compressed if the force of a compressed overload spring 21, enclosed within the piston, is overcome. This may occur if the valve pin cannot be pushed further into the valve, and the temperature still rises further.

The ability to axially adjust the position of the sensor holder means that a user can set the valve-thermostat characteristics such that a desired room temperature is obtained.

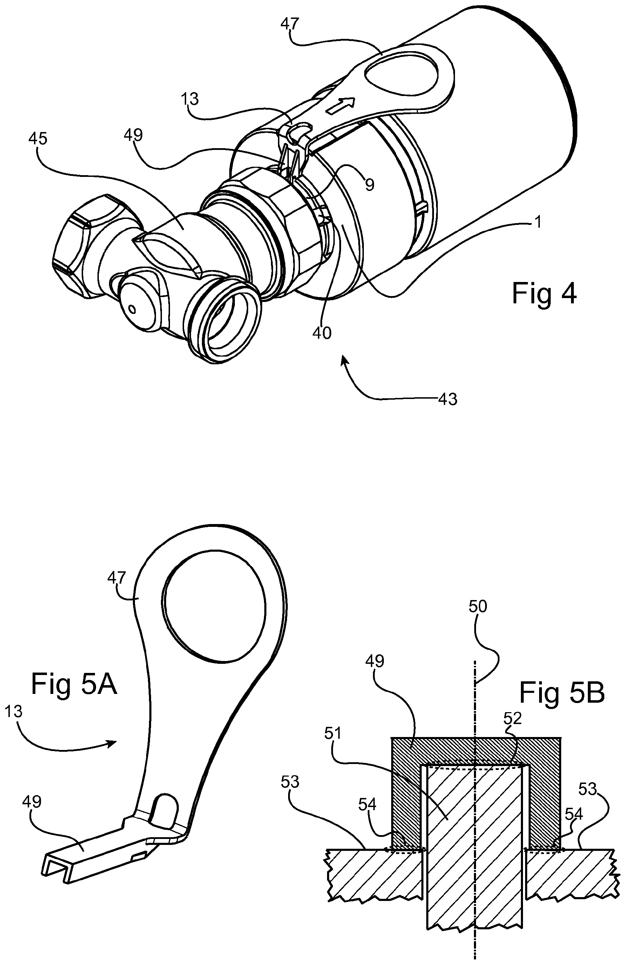

In the present disclosure and as shown in fig 4, a balancing pin 13 is provided as mentioned previously, which conveniently allows a valve 45 and thermostat 1 combination 43 to be delivered, for instance when a new installation is made as e.g. a residental building is constructed.

When initially setting up a fluid heating system in a building, the system needs to be balanced such that an appropriate amount of thermal energy is distributed in each room. During this process, each radiator valve should be set to a reference value. Typically, this reference value can be the valve lift that corresponds to a 2°K temperature difference, for instance the valve lift when the room temperature is 20°C and the desired temperature is 22°C. In some commonly available valves this corresponds to the valve seat being lifted 0.45 mm, and the pin extending e.g. about 3 mm from the adjacent valve surface. Previously, this has been achieved by attaching a tool on the valve, instead of a thermostat, to carefully set the valve pin to the correct position. When the system has been balanced, the tool is replaced with a thermostat.

In the present disclosure, the thermostat may be fitted to the radiator valve from the outset and balancing may be achieved without using special tools at the radiator. This is accompliched by means of the previously mentioned balancing pin 13. The pin 13 includes a handle 47 and an inserted blocking part 49 as shown in fig 4.

The balancing pin is shown per se in fig 5A. As illustrated, the blocking part 49 may have a U-shaped cross section which means that it can accommodate the valve pin of the radiator valve, while providing a sufficient bending stiffness. Optionally, the legs of the U-shaped cross section may rest against the valve at two sides of the valve pin. The balancing pin may be made in one piece by injection moulding a plastic material.

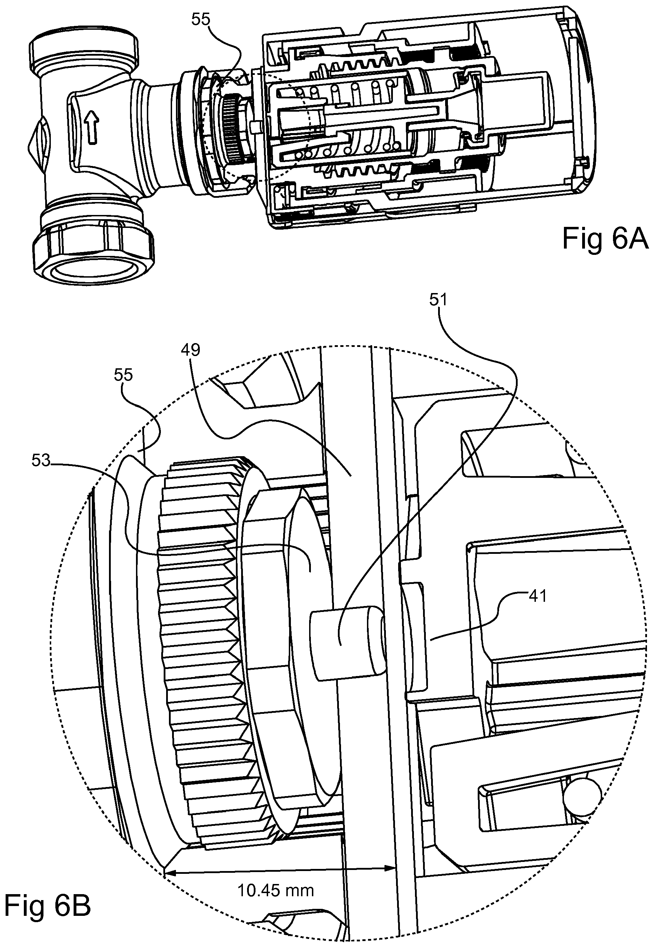

The blocking part 49 is inserted into the base part 9 of the thermostat, through its centre, such that it becomes located between the valve pin 51 and the thermostat piston 37 as is shown in the partial cross section of fig 6A and the enlarged portion thereof in fig 6B. To this end, the base part has openings (cf. 40 in fig 3 and in fig 4) that allows the blocking part 49 to be inserted such that it perpendicularly crosses the axis 50 (cf. fig 5B) along which the thermostat piston 37 moves. In the illustrated embodiment, the inserted part has a U-shaped cross section with an open end facing the valve pin 51 thus forming a groove in the inserted part 49. The depth of the channel formed by the U-shaped cross section together with the locations of the openings in the base part may correspond to the valve pin extension, e.g. a few mm that provides desired valve reference value opening, such as mentioned above, 0.45 mm. The valve may have a reference surface 55, as shown in figs 6A and 6B, against which a reference surface 57 (cf. fig 3) of the thermostat base part can rest when the thermostat is attached to the valve. In the case shown in figs 6A and 6B, a 10.45 mm distance from the reference surface 55 to the tip of the pin 51 and the bottom of the U-shaped groove is used to achieve the desired setting.

Optionally, the inserted part can be located such that it rests against the adjacent valve surface 53 at both sides of the pin, such that the depth of the groove defines the pin extension from the valve surface. This optional embodiment is further illustrated in the schematic cross section of fig 5B. More generally, the blocking part 49 can be said to have a retracted surface 52 and at least one protruding surface 54. The retracted surface is aligned with a centre axis of the piston 37, and the protruding surface is offset with regard to said centre axis, such that the protruding surface is arranged to rest against the valve 53 at a side of a valve pin 51. At the same time, the retracted surface is adapted to allow the valve pin 51 to extend a predermined distance out of the valve.

However, it is sufficient that the centre part of the pin and the valve are kept at a predetemined distance from each other, and there may as well be a gap between the protruding surfaces 54 and the valve surface. Further, the inserted part 49 can, for instance, have a rectangular cross section. When correctly fitted on the valve, the retracted surface 52 will still maintain the valve pin 51 at a desired position. Nevertheless, the U-shaped cross section may be useful also in this case as it gives the pin a better bending stiffness, while allowing the pin to extend from the valve.

In any case, the valve pin is kept at the reference value regardless of the room temperature. The pin is effectively kept apart from the thermostat piston which cannot influence the valve setting.

When balancing has been carried out, the balancing pin 13 can be pulled out such that the thermostat becomes active. This does not require any training, and can be done by an end user, not otherwise being involved in the installation of the system. For instance, in the case of a residential building, the pin can be removed by the inhabitant when moving in. This saves one measure per radiator as compared to previous systems, where the thermostat must be installed by e.g. a plumber after balancing.

The present disclosure is not restricted to the described embodiment and may be altered in various ways within the scope of the appended claims. For instance, an insterted blocking part of the balancing pin could have an L-shaped cross section that optionally may rest on one side of the valve pin. Further, a radiator valve type would be conceivable where the valve pin spontaneously reaches a desired reference setting when not affected by a thermostat. In that case, the inserted blocking part need only provide a protective arch over the valve pin that allows the valve pin to set in the reference position.

## Claims

1. A thermostat, for a radiator, including a body portion (9), which is adapted to be mounted to a radiator valve of the radiator, a sensing element (33) which depending on room temperature influences a piston (37, 38, 39, 41), an end (41) of the piston being adapted, under operation, to influence a valve pin of the radiator valve, wherein the thermostat further comprises a removable balancing pin (13) with a blocking part (49) which is inserted in the body portion (9) and which, when the thermostat is connected to a radiator valve, prohibits the piston from influencing a radiator valve pin until the removable balancing pin is removed, wherein the blocking part (49) has, facing the radiator valve, a contact surface (52), the contact surface being aligned with a centre axis of the piston (37) and the blocking part being fixed within the thermostat such that the contact surface is adapted to be kept at a predetermined distance to a cavity (15) adapted to accommodate the valve, thereby allowing a valve pin to extend a predetermined distance out of the adjacent valve surface, **characterized in that** the removable balancing pin (13) comprises a gripping part (47), which is connected to the blocking part (49) and which is accessible from the exterior of the thermostat to pull out the blocking part (49) of the balancing pin from the thermostat body portion (5).

2. A thermostat according to claim 1, wherein the blocking part (49) has, facing the radiator valve, a retracted contact surface (52) and at least one protruding surface, the retracted surface being aligned with a centre axis of the piston (37) and the protruding surface being offset with regard to said centre axis, such that the protruding surface is arranged to rest against the valve at a side of a valve pin while the retracted surface is adapted to allow the valve pin to extend a predetermined distance out of the valve.

3. A thermostat according to claim 1 or 2, wherein the blocking part (49) has a U-shaped cross section, forming a groove which is adapted to accommodate the valve pin.

4. A thermostat according to any of claims 1-3, wherein said predetermined distance is in the range between 2 and 6 mm.

5. A combination of a thermostat and a valve for a radiator, wherein the thermostat is attached to the radiator valve for influencing a valve pin of the radiator valve, the thermostat including a base portion (9), which is adapted to be fixed in relation to a valve of the radiator, a sensing element (33) which depending on room temperature influences a piston (37, 38, 39, 41) an end of the piston being intended under operation to influence the valve pin, wherein a removable balancing pin (13) with a blocking part (49) is inserted in the thermostat base portion and prohibits the piston from influencing the valve pin until the balancing pin is removed, wherein the blocking part (49) has, facing the radiator valve, a contact surface (52), the contact surface being aligned with a centre axis of the piston (37) and the blocking part being fixed within the thermostat such that the contact surface is adapted to be kept at a predetermined distance to a cavity (15) adapted to accommodate the valve, thereby allowing the valve pin to extend a predetermined distance out of the adjacent valve surface, **characterized in that** the removable balancing pin (13) comprises a gripping part (47), which is connected to the blocking part (49) and which is accessible from the exterior of the thermostat to pull out the blocking part (49) of the balancing pin from the thermostat body portion (5).

6. A combination according to claim 5, wherein the blocking part (49) has, facing the radiator valve, a retracted surface and at least one protruding surface, the retracted surface being aligned with valve pin (51) and the protruding surface being offset with regard to the valve pin, such that the protruding surface rests against a valve surface (53) at a side of the valve pin while the retracted surface is adapted to allow the valve pin to extend a predetermined distance out of the valve.

7. A combination according to claim 5 or 6, wherein the blocking part (49) has a U-shaped cross section, forming a groove which is adapted to accommodate the valve pin and allow the valve pin to extend said predetermined distance out of the valve.

8. A combination according to any of claims 5-7, wherein said predetermined distance corresponds to a balancing setting of the valve.

9. A combination according to claim 6, wherein said predetermined distance is in the range between 2 and 6 mm, corresponding to the distance the valve is open when an operative thermostat indicates a temperature difference of 2°K.

## Patentansprüche

1. Thermostat für einen Heizkörper, der einen Körperabschnitt (9), der um an ein Heizkörperventil des Heizkörpers angebracht zu werden angepasst ist, ein Sensorelement (33), das in Abhängigkeit von der Raumtemperatur einen Kolben (37, 38, 39, 41) beeinflusst, aufweist, wobei ein Ende (41) des Kolbens angepasst ist, im Betrieb einen Ventilstift des Heizkörperventils zu beeinflussen, wobei der Thermostat ferner einen entfernbaren Ausgleichsstift (13) mit einem Sperrteil (49) umfasst, das in den Körperabschnitt (9) eingesetzt ist und das, wenn der Thermostat mit einem Heizkörperventil verbunden ist, den Kolben daran hindert, einen Heizkörperventilstift zu beeinflussen, bis der entfernbare Ausgleichsstift entfernt ist, wobei das Sperrteil (49), eine dem Heizkörperventil zugewandte Kontaktfläche (52) aufweist, wobei die Kontaktfläche mit einer Mittelachse des Kolbens (37) ausgerichtet ist und das Sperrteil innerhalb des Thermostats derart fixiert ist, dass die Kontaktfläche angepasst ist, um in einem vorbestimmten Abstand zu einem Hohlraum (15) gehalten zu werden, der angepasst ist, um das Ventil aufzunehmen, wodurch ermöglicht wird, dass sich ein Ventilstift um einen vorbestimmten Abstand aus der benachbarten Ventilfläche heraus erstreckt, **dadurch gekennzeichnet, dass** der entfernbare Ausgleichsstift (13) ein Griffteil (47) umfasst, das mit dem Sperrteil (49) verbunden ist und von der Außenseite des Thermostats zugänglich ist, um das Sperrteil (49) des Ausgleichsstifts aus dem Thermostatkörperabschnitt (5) herauszuziehen.

2. Thermostat nach Anspruch 1, wobei das Sperrteil (49) eine dem Heizkörperventil zugewandte zurückgezogene Kontaktfläche (52) und mindestens eine vorstehende Fläche aufweist, wobei die zurückgezogene Fläche mit einer Mittelachse des Kolbens (37) ausgerichtet ist und die hervorstehende Fläche in Bezug auf die Mittelachse derart versetzt ist, dass die hervorstehende Fläche so angeordnet ist, dass sie an einer Seite eines Ventilstifts an dem Ventil anliegt, während die zurückgezogene Fläche angepasst ist, dem Ventilstift zu ermöglichen, sich um einen vorbestimmten Abstand aus dem Ventil heraus zu erstrecken.

3. Thermostat nach Anspruch 1 oder 2, wobei das Sperrteil (49) einen U-förmigen Querschnitt aufweist, der eine Nut bildet, die zur Aufnahme des Ventilstifts angepasst ist.

4. Thermostat nach Anspruch 1-3, wobei der vorbestimmte Abstand im Bereich zwischen 2 und 6 mm liegt.

5. Kombination eines Thermostats und eines Ventils für einen Heizkörper, wobei der Thermostat zur Beeinflussung eines Ventilstifts des Heizkörperventils am Heizkörperventil angebracht ist, wobei der Thermostat einen Basisabschnitt (9), der um an ein Heizkörperventil des Heizkörpers angebracht zu werden angepasst ist, ein Sensorelement (33), das in Abhängigkeit von der Raumtemperatur einen Kolben (37, 38, 39, 41) beeinflusst, aufweist, wobei ein Ende des Kolbens angepasst ist, im Betrieb einen Ventilstift des Heizkörperventils zu beeinflussen, wobei ein entfernbarer Ausgleichsstift (13) mit einem Sperrteil (49) in den Thermostatbasisabschnitt eingesetzt ist und verhindert, dass der Kolben den Ventilstift beeinflusst, bis der Ausgleichsstift entfernt ist,
wobei das Sperrteil (49) eine dem Heizkörperventil zugewandte Kontaktfläche (52) aufweist, wobei die Kontaktfläche mit einer Mittelachse des Kolbens (37) ausgerichtet ist und das Sperrteil innerhalb des Thermostats derart fixiert ist, dass die Kontaktfläche angepasst ist, um in einem vorbestimmten Abstand zu einem Hohlraum (15) gehalten zu werden, der angepasst ist, um das Ventil aufzunehmen, wodurch ermöglicht wird, dass sich ein Ventilstift um einen vorbestimmten Abstand aus der benachbarten Ventilfläche heraus erstreckt, **dadurch gekennzeichnet, dass** der entfernbare Ausgleichsstift (13) ein Griffteil (47) umfasst, das mit dem Sperrteil (49) verbunden ist und von der Außenseite des Thermostats zugänglich ist, um das Sperrteil (49) des Ausgleichsstifts aus dem Thermostatkörperabschnitt (5) herauszuziehen.

6. Kombination nach Anspruch 5, wobei das Sperrteil (49) eine dem Heizkörperventil zugewandte Fläche und mindestens eine vorstehende Fläche aufweist, wobei die zurückgezogene Fläche mit dem Ventilstift (51) ausgerichtet ist und die vorstehende Fläche in Bezug auf den Ventilstift versetzt ist, so dass die vorstehende Fläche an einer Ventilfläche (53) an einer Seite des Ventilstifts anliegt, während die zurückgezogene Fläche so angepasst ist, um zu ermöglichen, dass sich ein Ventilstift um einen vorbestimmten Abstand aus dem Ventil heraus erstreckt.

7. Kombination nach Anspruch 5 oder 6, wobei das Sperrteil (49) einen U-förmigen Querschnitt aufweist, der eine Nut bildet, die zur Aufnahme des Ventilstifts angepasst ist und um zu ermöglichen, dass sich ein Ventilstift um einen vorbestimmten Abstand aus dem Ventil heraus erstreckt.

8. Kombination nach Anspruch 5-7, wobei der vorbestimmte Abstand einer Ausgleichseinstellung des Ventils entspricht.

9. Kombination nach Anspruch 6, wobei der vorbestimmte Abstand im Bereich zwischen 2 und 6 mm liegt, entsprechend dem Abstand, den das Ventil öffnet, wenn ein operativer Thermostat eine Temperaturdifferenz von 2°K anzeigt.

## Revendications

1. Thermostat pour un radiateur, comprenant une partie de corps (9) adaptée pour être montée sur une soupape de radiateur du radiateur, un élément de détection (33) influençant un piston (37, 38, 39, 41) en fonction de la température ambiante, une extrémité (41) du piston étant adaptée pour influencer une tige de soupape de la soupape de radiateur pendant le fonctionnement, dans lequel le thermostat comprend en outre une goupille d'équilibrage amovible (13) avec une partie de blocage (49) insérée dans la partie de corps (9) et empêchant le piston d'influencer une tige de soupape de radiateur jusqu'au retrait de la goupille d'équilibrage amovible lorsque le thermostat est relié à une soupape de radiateur, dans lequel la partie de blocage (49) comporte une surface de contact (52) tournée vers la soupape de radiateur, la surface de contact étant alignée avec un axe central du piston (37) et la partie de blocage étant fixée dans le thermostat de telle façon que la surface de contact est adaptée pour être maintenue à une distance prédéterminée d'une cavité (15) adaptée pour accueillir la soupape, permettant ainsi à une tige de soupape de s'étendre sur une distance prédéterminée hors de la surface de soupape adjacente, **caractérisé en ce que** la goupille d'équilibrage amovible (13) comprend une partie de préhension (47) reliée à la partie de blocage (49) et accessible depuis l'extérieur du thermostat pour retirer la partie de blocage (49) de la goupille d'équilibrage hors de la partie de corps (5) du thermostat.

2. Thermostat selon la revendication 1, dans lequel la partie de blocage (49) comporte une surface de contact rétractée (52) tournée vers la soupape de radiateur, et au moins une surface saillante, la surface rétractée étant alignée avec un axe central du piston (37) et la surface saillante étant décalée par rapport audit axe central, de sorte que la surface saillante est conçue pour reposer contre la soupape sur un côté de la tige de soupape, tandis que la surface rétractée est adaptée pour permettre à la tige de soupape de s'étendre à une distance prédéterminée hors de la soupape.

3. Thermostat selon la revendication 1 ou 2, dans lequel la partie de blocage (49) présente une section transversale en forme de U, formant une rainure adaptée pour accueillir la tige de soupape.

4. Thermostat selon l'une quelconque des revendications 1 à 3, dans lequel ladite distance prédéterminée est comprise entre 2 et 6 mm.

5. Combinaison d'un thermostat et d'une soupape pour un radiateur, dans laquelle le thermostat est fixé à la soupape de radiateur pour influencer une tige de soupape de la soupape de radiateur, le thermostat comprenant une partie de base (9) adaptée pour être fixée par rapport à une soupape du radiateur, un élément de détection (33) influençant un piston (37, 38, 39, 41) en fonction de la température ambiante, une extrémité du piston étant destinée à influencer la tige de soupape pendant le fonctionnement,
dans laquelle une goupille d'équilibrage amovible (13) avec une partie de blocage (49) est insérée dans la partie de base du thermostat et empêchant le piston d'influencer la tige de soupape jusqu'au retrait de la goupille d'équilibrage, dans laquelle la partie de blocage (49) comporte une surface de contact (52) tournée vers la soupape de radiateur, la surface de contact étant alignée avec un axe central du piston (37) et la partie de blocage étant fixée dans le thermostat de telle façon que la surface de contact est adaptée pour être maintenue à une distance prédéterminée d'une cavité (15) adaptée pour accueillir la soupape, permettant ainsi à une tige de soupape de s'étendre à une distance prédéterminée hors de la surface de soupape adjacente, **caractérisée en ce que** la goupille d'équilibrage amovible (13) comprend une partie de préhension (47) reliée à la partie de blocage (49) et accessible depuis l'extérieur du thermostat pour retirer la partie de blocage (49) de la goupille d'équilibrage hors de la partie de corps (5) du thermostat.

6. Combinaison selon la revendication 5, dans laquelle la partie de blocage (49) comporte une surface de contact rétractée tournée vers la soupape de radiateur et au moins une surface saillante, la surface rétractée étant alignée avec la tige de soupape (51) et la surface saillante étant décalée par rapport à la tige de soupape, de sorte que la surface saillante repose contre une surface de soupape (53) sur un côté de la tige de soupape, tandis que la surface rétractée est adaptée pour permettre à la tige de soupape de s'étendre à une distance prédéterminée hors de la soupape.

7. Combinaison selon la revendication 5 ou 6, dans laquelle la partie de blocage (49) présente une section transversale en forme de U, formant une rainure adaptée pour accueillir la tige de soupape et permettre à la tige de soupape de s'étendre sur ladite distance prédéterminée hors de la soupape.

8. Combinaison selon l'une quelconque des revendications 5 à 7, dans laquelle ladite distance prédéterminée correspond à un réglage d'équilibrage de la soupape.

9. Combinaison selon la revendication 6, dans laquelle ladite distance prédéterminée est comprise entre 2 et 6 mm, correspondant à la distance sur laquelle la soupape est ouverte lorsqu'un thermostat opérationnel indique une différence de température de 2°K.
